# EUROPEAN PATENT APPLICATION

(11) **EP 4 488 239 A1**
(43) Date of publication of application: **08.01.2025**
(21) Application number: 23759599.6
(22) Date of filing: 31.01.2023
(51) Int. Cl.: C02F 1/76

(54) **WATER TREATMENT DEVICE AND WATER TREATMENT METHOD**

(30) Priority: 28.02.2022 JP 2022029105
(71) Applicant: Kurita Water Industries Ltd., Tokyo 164-0001 (JP)
(72) Inventor: TOCHINAI, Masahito, Tokyo 164-0001 (JP)
(74) Representative: TBK
(86) International application number: PCT/JP2023/003009
(87) International publication number: WO 2023/162593

(57) **Abstract**

In this water treatment apparatus and water treatment method, the chlorine demand of raw water W is measured using a chlorine demand meter 9, and sodium hypochlorite corresponding to the chlorine demand is added from a sodium hypochlorite addition means 3. Additionally, the concentration of urea in the raw water W is measured using a urea meter 8, and, on the basis of the urea concentration, additional sodium hypochlorite is added from the sodium hypochlorite addition means 3 and sodium bromide is added from a sodium bromide addition means 4. According to the present invention, it is possible to provide a water treatment method and water treatment apparatus in which a chemical agent required for dissolution of urea is added without excess or insufficiency, even if there is fluctuation in components consuming hypochlorite within the water being treated, and in which urea is stably and reliably removed.

## Description

### Technical Field

The present invention relates to a water treatment apparatus suitable for efficiently decomposing and removing urea in water to produce and supply ultrapure water with a low TOC concentration, and a water treatment method using the water treatment apparatus.

### Related Art

Conventionally, an ultrapure water production apparatus for producing ultrapure water from raw water such as city water, ground water, and industrial water is basically composed of a pretreatment device, a primary pure water production device, and a secondary pure water production device. Among these, the pretreatment device is usually composed of a flocculation device, a flotation device, a filtration device, etc. The primary pure water production device is composed of one or two reverse osmosis membrane devices and a mixed bed ion exchange device, or an ion exchange device and a reverse osmosis membrane device; and the secondary pure water production device is composed of a low-pressure ultraviolet oxidation device, a mixed bed ion exchange device, and an ultrafiltration membrane device.

The supplied ultrapure water is required to have high purity water quality with the TOC (total organic carbon) sufficiently reduced, but urea is a component that is difficult to remove in the ultrapure water production apparatus, and remaining urea leads to an increase in the TOC concentration in ultrapure water, so it is extremely important to remove urea in the ultrapure water production apparatus.

Thus, Patent Document 1 discloses a treatment using the water treatment apparatus as shown in FIG. 3. In this water treatment apparatus 21, a sodium hypochlorite (NaClO) addition means 23 and a sodium bromide (NaBr) addition means 24 are connected midway to a supply pipe 22 for raw water W as chemical addition mechanisms, a mixer 25 and a reaction tank 26 are provided on the downstream side of these, and a sodium bisulfite (NaHSO₃) addition mechanism 27 is connected to the later stage as a reducing agent, so that the treated water W1 can be supplied to a later-stage treatment such as a primary pure water device. In the water treatment apparatus 21 as described above, a urea meter 28 is provided on the upstream side of the sodium hypochlorite (NaClO) addition mechanism 23 in the supply pipe 22 for the raw water W, and the sodium hypochlorite addition means 23 and the sodium bromide addition means 24 can be controlled by a control means (not shown) based on the measurement value of this urea meter 28.

In the water treatment apparatus 21 as described above, the amounts of sodium hypochlorite and sodium bromide added are controlled based on the measurement value of the urea meter 28 so as to add the chemicals required for decomposing urea without excess or insufficiency, thereby stably and reliably decomposing and removing urea, and supplying the treated water W1 to the treatment device in the later stage.

Furthermore, as a technology for decomposing and removing urea in the supplied water in an ultrapure water production process, the applicant has proposed a water treatment method that has a urea decomposition step of adding a water-soluble bromide salt and hypochlorite to the water being treated and decomposing the urea in the water being treated with the generated hypobromite ions. The water treatment method measures the free residual chlorine concentration in the effluent water from the urea decomposition step and controls the amount of hypochlorite added based on this measurement value to add the chemicals required for the decomposition of urea without excess or insufficiency, and thereby stably and reliably decomposes and removes urea without increasing the cost of treatment (Patent Document 2).

### Citation List

### Patent Documents

[Patent Document 1] Japanese Patent Application Laid-Open No. 9-94585
[Patent Document 2] Japanese Patent Application Laid-Open No. 2019-63768

### SUMMARY OF INVENTION

### Technical Problem

According to the method of Patent Document 1, the chemicals can be added corresponding to the urea concentration in the water being treated, that is, the target of the treatment, so it is possible to avoid excessive or insufficient chemical addition to some extent. However, if the water being treated contains components (for example, ammoniacal nitrogen) that consume these chemicals, it is not possible to detect insufficiency in the amounts of chemicals added, and as a result, there is a concern that urea may leak into the treated water.

In addition, the water treatment method of Patent Document 2 makes it possible to add the right amounts of chemicals required for the decomposition of urea. However, it has been found that if components such as ammonia, humic substances, iron, and manganese, which consume hypochlorite, are present in the water being treated, the consumption of hypochlorite, which is an oxidizing agent, may cause insufficiency in the amounts of chemicals added that are required for the decomposition of urea, and raise a concern that urea may leak into the treated water.

It is conceivable to add excessive amounts of chemicals to solve these problems. Nevertheless, while this approach may eliminate urea leakage into the treated water, the amount of chemical, such as sodium bisulfite, added for reducing the oxidizing agent in the later stage also increases, which causes the problem that the cost of urea treatment rises due to the increased ion load in the later stage.

In view of the above, the present invention provides a water treatment method and a water treatment apparatus which, when adding a water-soluble bromide salt and hypochlorite to the water being treated and decomposing urea in the water being treated with the generated hypobromite ions, add chemicals required for the decomposition of urea without excess or insufficiency even when the components that consume hypochlorite in the water being treated fluctuate, thereby stably and reliably removing urea without increasing the cost of urea treatment. Solution to Problem

In order to achieve the above, firstly, the present invention provides a water treatment apparatus including a chemical addition mechanism which includes a water-soluble bromide salt addition means and a hypochlorite addition means provided in a supply flow path for water being treated. The water treatment apparatus includes: a urea concentration measuring means provided upstream of the chemical addition mechanism; and a control means adding hypochlorite based on chlorine consumption of the water being treated, and further adding hypochlorite from the hypochlorite addition means based on a measurement result of the urea concentration measuring means (Invention 1).

According to this invention (Invention 1), the amount of extra hypochlorite to be added is determined based on the chlorine consumption of the water being treated, the addition amounts of the water-soluble bromide salt and hypochlorite required for urea decomposition are determined based on the urea concentration contained in the water being treated, and the addition amount of hypochlorite is controlled based on these, thereby adding the water-soluble bromide salt and hypochlorite without excess or insufficiency to stably treat urea even if the water quality of the water being treated fluctuates.

In the above invention (Invention 1), it is preferable to include a chlorine demand measuring means for the water being treated, upstream of the chemical addition mechanism, and the control means adds hypochlorite at 0.1 mg/L to 10 mg/L (as available chlorine) based on a measurement value of the chlorine demand measuring means (Invention 2).

According to this invention (Invention 2), the chlorine demand of the water being treated, which is the raw water, is measured by a chlorine demand meter, and the downstream hypochlorite addition means is feedforward-controlled based on the measurement value of the chlorine demand and the measurement value of the urea concentration measuring means. Thus, the water-soluble bromide salt and hypochlorite can be added without excess or insufficiency to stably treat urea even if the water quality of the water being treated fluctuates.

In the above invention (Invention 1), it is preferable to include a residual chlorine concentration measuring means for the water being treated, on an upstream side of the chemical addition mechanism, and a pretreatment hypochlorite addition means upstream of the residual chlorine concentration measuring means, and the control means controls an addition amount of hypochlorite from the pretreatment hypochlorite addition means so that a residual chlorine concentration of the water being treated is 0.1 mg/L to 10 mg/L (as available chlorine) (Invention 3).

According to this invention (Invention 3), when the residual chlorine concentration of the water being treated is detected to be equal to or greater than a certain value due to the addition of hypochlorite, it is deemed that hypochlorite has been added in an amount corresponding to chlorine consumption, and the pretreatment hypochlorite addition means is feedback-controlled based on the measurement value of the residual chlorine meter so that the measurement value is 0.1 mg/L to 10 mg/L (as available chlorine). Further, the hypochlorite addition means is controlled based on the measurement value of the urea concentration measuring means. Thus, the water-soluble bromide salt and hypochlorite can be added without excess or insufficiency to stably treat urea even if the water quality of the water being treated fluctuates.

Secondly, the present invention provides a water treatment method for adding a water-soluble bromide salt and hypochlorite to water being treated and decomposing urea in the water being treated with generated hypobromite ions. The water treatment method includes: adding hypochlorite based on chlorine consumption of the water being treated before adding the water-soluble bromide salt and hypochlorite, measuring a urea concentration of the water being treated, and further adding hypochlorite based on a measurement result of the urea concentration (Invention 4).

According to this invention (Invention 4), the addition amount of hypochlorite is determined based on the chlorine demand of the water being treated, the addition amounts of the water-soluble bromide salt and hypochlorite required for urea decomposition are determined based on the urea concentration contained in the water being treated, and the addition amount of hypochlorite is controlled based on these, thereby adding the water-soluble bromide salt and hypochlorite without excess or insufficiency to stably treat urea even if the water quality of the water being treated fluctuates.

In the above invention (Invention 4), it is preferable to measure a chlorine demand of the water being treated before adding the water-soluble bromide salt and hypochlorite, and add hypochlorite at 0.1 mg/L to 10 mg/L (as available chlorine) based on the chlorine consumption of the water being treated (Invention 5).

According to this invention (Invention 5), the chlorine demand of the water being treated, which is the raw water, is measured by a chlorine demand meter, and the addition amount of hypochlorite on the downstream side is feedforward-controlled based on the measurement value of the chlorine demand and the measurement value of the urea concentration measuring means, thereby adding the water-soluble bromide salt and hypochlorite without excess or insufficiency to stably treat urea even if the water quality of the water being treated fluctuates.

In the above invention (Invention 4), it is preferable to measure a residual chlorine concentration of the water being treated before adding the water-soluble bromide salt and hypochlorite, and add pretreatment hypochlorite to the water being treated so that the residual chlorine concentration of the water being treated is 0.1 mg/L to 10 mg/L (as available chlorine) (Invention 6).

According to this invention (Invention 6), when the residual chlorine concentration of the water being treated is detected to be equal to or greater than a certain value due to the addition of hypochlorite, it is deemed that hypochlorite has been added in an amount corresponding to chlorine consumption, and the pretreatment hypochlorite addition means is feedback-controlled based on the measurement value of the residual chlorine meter so that the measurement value is 0.1 mg/L to 10 mg/L (as available chlorine). Further, the hypochlorite addition means is controlled based on the measurement value of the urea concentration measuring means. Thus, the water-soluble bromide salt and hypochlorite can be added without excess or insufficiency to stably treat urea even if the water quality of the water being treated fluctuates.

In the above inventions (Inventions 4 to 6), it is preferable to control an addition amount of the water-soluble bromide salt based on a measurement value of the urea concentration (Invention 7).

According to this invention (Invention 7), by appropriately adding not only hypochlorite but also the water-soluble bromide salt based on the urea concentration, the cost of chemicals can be further optimized.

### Effects of Invention

The water treatment apparatus of the present invention includes the urea concentration measuring means provided upstream of the water-soluble bromide salt addition means and the hypochlorite addition means, and the control means for adding hypochlorite based on the chlorine consumption of the water being treated and further adding hypochlorite from the hypochlorite addition means based on the measurement result of the urea concentration measuring means. Therefore, by determining the addition amount of hypochlorite based on the chlorine consumption of the water being treated and further determining the addition amounts of the water-soluble bromide salt and hypochlorite required for urea decomposition based on the urea concentration contained in the water being treated, and controlling the addition amount of hypochlorite based on these, it is possible to add the water-soluble bromide salt and hypochlorite without excess or insufficiency to stably treat urea even if the water quality of the water being treated fluctuates. Furthermore, the chlorine demand may be measured by a DPD (deoxypyridinoline) method.

### BRIEF DESCRIPTION OF DRAWINGS

FIG. 1 is a schematic diagram showing a water treatment apparatus according to the first embodiment of the present invention.
FIG. 2 is a schematic diagram showing a water treatment apparatus according to the second embodiment of the present invention.

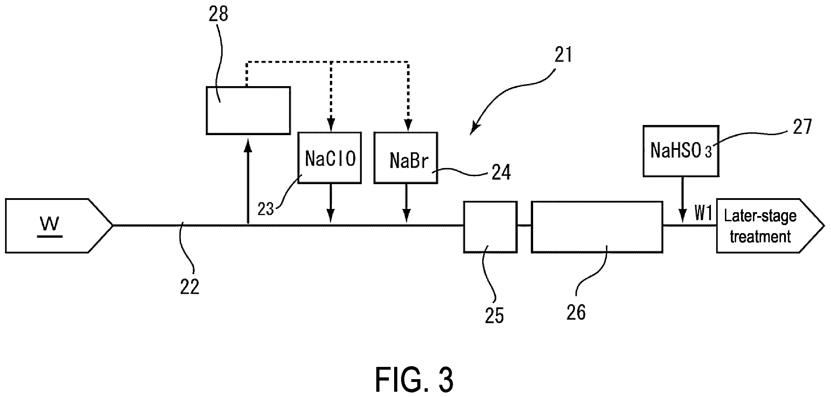

FIG. 3 is a schematic diagram showing a conventional water treatment apparatus.

### DESCRIPTION OF EMBODIMENTS

An ultrapure water production apparatus of the present invention will be described in detail below.

### [First embodiment]

### <Water treatment apparatus>

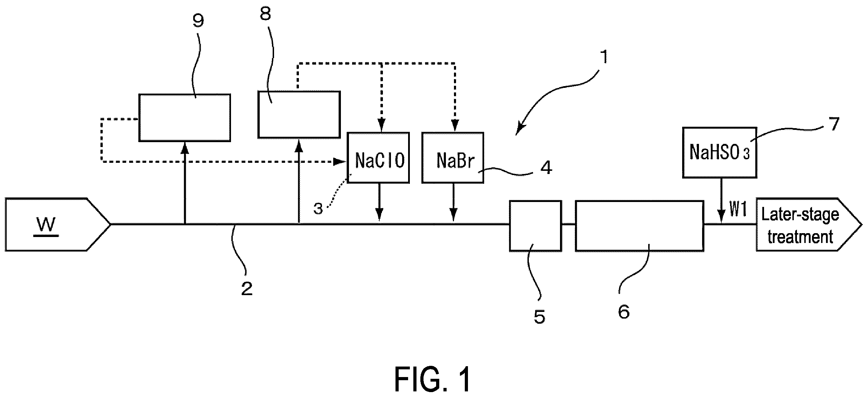

FIG. 1 shows a water treatment apparatus according to the first embodiment of the present invention. This water treatment apparatus 1 is respectively connected to a supply pipe 2 for raw water W that is the water being treated, and a sodium hypochlorite (NaClO) addition means 3 as hypochlorite and a sodium bromide (NaBr) addition means 4 as a water-soluble bromide salt, both of which are provided midway in the supply pipe 2. The sodium hypochlorite addition means 3 and the sodium bromide addition means 4 constitute a chemical addition mechanism. A mixer 5 and a reaction tank 6 are provided on the downstream side of this chemical addition mechanism, and a sodium bisulfite (NaHSO₃) addition means 7 as a reducing agent is connected in the later stage, so that treated water W1 can be supplied to a later-stage treatment such as a primary pure water device.

In the water treatment apparatus 1 as described above, a chlorine demand meter 9 and a urea meter 8 are provided on the supply pipe 2 for the raw water W on the upstream side of the sodium hypochlorite addition means 3. The chlorine demand meter 9, the urea meter 8, the sodium hypochlorite addition means 3, and the sodium bromide addition means 4 are respectively connected to a control means (not shown), so that the sodium hypochlorite addition means 3 and the sodium bromide addition means 4 can be controlled based on the measurement values of the chlorine demand meter 9 and the urea meter 8. The chlorine demand meter 9 may be, for example, a meter that is capable of continuously measuring the chlorine demand of ammoniacal nitrogen, iron, manganese, organic matter, etc. in a short period of time, and may be a meter that quantifies and measures only ammoniacal nitrogen in some cases.

### <Water treatment method>

Next, a water treatment method according to this embodiment using the water treatment apparatus as described above will be described.

First, when the raw water W is supplied to the supply pipe 2, the chlorine demand of the raw water W is measured by the chlorine demand meter 9, and sodium hypochlorite according to the indicated value (chlorine demand) is added from the sodium hypochlorite addition means 3 by the control means. The addition amount of sodium hypochlorite at this time is generally 0.1 mg/L to 10 mg/L (as available chlorine). Next, the urea concentration of the raw water W is measured by the urea meter 8, and based on this urea concentration, further sodium hypochlorite is added from the sodium hypochlorite addition means 3 by the control means, and sodium bromide is added from the sodium bromide addition means 4. In this case, the total amount of sodium hypochlorite may be added from one sodium hypochlorite addition means 3, or a plurality of sodium hypochlorite addition means 3 (for example, two) may be provided to add sodium hypochlorite according to the chlorine demand and sodium hypochlorite to be used for urea decomposition, respectively.

It is presumed that urea is decomposed by sodium hypochlorite (hypochlorite) and sodium bromide (water-soluble bromide salt) based on the following reaction.

NaBr+NaClO→2Na⁺+Br⁻+ClO⁻ ... (1)

Br⁻+ClO⁻→BrO⁻+Cl⁻ ... (2)

(NH₂)₂CO+3BrO⁻→N₂+CO₂+2H₂O+3Br⁻ ... (3)

As shown in the above reaction formulas, hypobromite ions (BrO⁻) generated from sodium bromide and sodium hypochlorite contribute to the decomposition of urea ((NH₂)₂CO), and the bromide ions (Br⁻) generated after the decomposition of urea further react with hypochlorite ions (ClO⁻) to become hypobromite ions (BrO⁻) again, which contribute to the decomposition of urea.

On the other hand, if the raw water W contains ammoniacal nitrogen such as ammonia (NH₃), this ammonia (NH₃) reacts with sodium hypochlorite according to the following reaction formula to generate chloramines (combined chlorine, combined residual chlorine), which inhibits the generation of hypobromite ions (BrO⁻). As a result, the amount of hypobromite ions (BrO⁻) generated decreases due to a shortage of hypobromite ions (BrO⁻), leading to a decrease in the urea decomposition rate.

NH₃+NaClO→NH₂Cl+NaOH

Therefore, conventionally an excessive amount of sodium hypochlorite has been added. In contrast thereto, in this embodiment, an amount of sodium hypochlorite corresponding to the chlorine demand is added based on the measurement value of the chlorine demand meter 9 and further an amount of sodium hypochlorite required for decomposing urea is added based on the urea concentration of the urea meter 8, and a required amount of sodium bromide is also added, thereby optimizing the addition amount of sodium hypochlorite and achieving stable urea decomposition treatment.

When sodium bromide and sodium hypochlorite are added to the raw water W in this manner, the sodium bromide and sodium hypochlorite are thoroughly mixed in the mixer 5, and then the mixture is retained in the reaction tank 6 for a predetermined time to complete the urea decomposition reaction. The raw water W is generally tap water or industrial water sourced from river water or lake water, and the urea concentration in the raw water W is a low concentration of several µg/L to several hundred µg/L, or at most 100 µg/L or less, for example, 20 µg/L to 60 µg/L. In such raw water W, the decomposition of urea caused by the hypobromite ions generated by adding sodium bromide and sodium hypochlorite tends to proceed relatively slowly. Therefore, in order to achieve urea decomposition with a urea concentration of 10 µg/L or less, or even several µg/L, it is preferable to ensure the reaction time in the reaction tank 6 as long as possible in the urea decomposition step. Specifically, it is preferable to ensure a reaction time of about 4 hours to 10 hours.

Once the urea in the raw water W has been decomposed in this manner, sodium bisulfite is added from the sodium bisulfite addition means 7 for a reduction treatment, and the resulting treated water W1 may be supplied to a later-stage treatment.

Here, a pure water production apparatus or an ultrapure water production apparatus can be suitably applied as the later-stage treatment. For example, the ultrapure water production apparatus generally has pretreatment devices such as raw water tank-flocculation reaction tank→pressurized flotation tank (sedimentation tank)-filter, which include tanks, towers, piping, pumps, etc., and is equipment that can obtain the desired reaction time and mixing effect. Therefore, these pretreatment devices may be given resistance to oxidizing agents (hypochlorous acid resistance, hypobromous acid resistance) and used as a substitute. More specifically, a bromide salt and hypochlorite may be added at the inlet of the raw water tank, the time of residence in all the pretreatment devices may be positioned as the reaction time, the addition of hypochlorite may be controlled so that the free chlorine concentration at the filter outlet is a predetermined value, and a reduction treatment may be performed on the water at the filter outlet.

In the water treatment method of this embodiment, the temperature of the raw water W is preferably adjusted to 15°C to 40°C, more preferably 20°C to 30°C. This is because it has been confirmed that, in the above-mentioned urea decomposition reaction, like general chemical reaction, under conditions of the same residence time, the urea decomposition rate tends to decrease when the water temperature is low, and the urea decomposition rate tends to increase as the water temperature increases. In a case where the raw water W is tap water or industrial water, the water temperature may fall below 10°C in winter, so it is preferable to provide water temperature regulation.

According to the water treatment apparatus of this embodiment as described above, the addition amount of sodium hypochlorite is feedforward-controlled based on the indicated values of the chlorine demand meter 9 and the urea meter 8, thereby optimizing the addition amount of sodium hypochlorite and achieving stable urea decomposition treatment.

### [Second embodiment]

Next, a water treatment apparatus according to the second embodiment of the present invention will be described.

### <Water treatment apparatus>

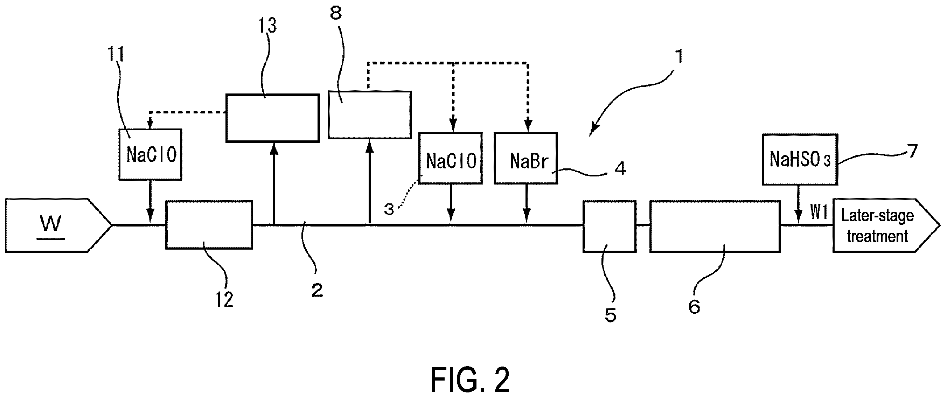

FIG. 2 shows an ultrapure water production apparatus according to the second embodiment. The ultrapure water production apparatus 1 of this embodiment has basically the same configuration as the water treatment apparatus of the first embodiment described above, so the same components are given the same reference numerals and the detailed description thereof will be omitted. In the water treatment apparatus 1 of FIG. 2, a sodium hypochlorite (NaClO) addition means 3 as hypochlorite and a sodium bromide (NaBr) addition means 4 as a water-soluble bromide salt are respectively connected to a supply pipe 2 of raw water W, and the sodium hypochlorite addition means 3 and the sodium bromide addition means 4 constitute a chemical addition mechanism. A mixer 5 and a reaction tank 6 are provided on the downstream side of this chemical addition mechanism, and a sodium bisulfite (NaHSO₃) addition mechanism 7 as a reducing agent is connected in the later stage, so that treated water W1 can be supplied to a later-stage treatment such as a primary pure water device.

In the water treatment apparatus 1 as described above, a pretreatment hypochlorite addition means 11, a relay tank 12, a residual chlorine meter 13, and a urea meter 8 are provided in this order on the upstream side of the sodium hypochlorite addition means 3. The residual chlorine meter 13, the urea meter 8, the sodium hypochlorite addition means 3, the sodium bromide addition means 4, and the pretreatment hypochlorite addition means 11 are respectively connected to a control means (not shown). Then, the pretreatment hypochlorite addition means 11 can be controlled based on the measurement value of the residual chlorine meter 13, and the sodium hypochlorite addition means 3 and the sodium bromide addition means 4 can be controlled based on the measurement value of the urea meter 8.

### <Water treatment method>

Next, a water treatment method using the water treatment apparatus as described above will be described.

First, when the raw water W is supplied to the supply pipe 2, sodium hypochlorite is added to the raw water W from the pretreatment hypochlorite addition means 11 and retained in the relay tank 12 for a predetermined time to react with ammoniacal nitrogen, iron, manganese, organic matter, etc. contained in the raw water W and be consumed. Then, the chlorine concentration of the raw water W flowing out from the relay tank 12 is measured by the residual chlorine meter 13. At this time, a residual chlorine concentration at which it can be determined that the chlorine demand has been met is set in advance, and the addition amount of hypochlorite from the pretreatment hypochlorite addition means 11 is feedback-controlled by the control means so that the measurement value of the residual chlorine meter 13 is equal to or greater than this value (predetermined value). Specifically, it is preferable to control the addition amount of sodium hypochlorite from the pretreatment hypochlorite addition means 11 so that the measurement value (residual chlorine concentration) of the raw water W measured by the residual chlorine meter 13 is 0.1 mg/L to 10 mg/L (as available chlorine).

Next, the urea concentration of the raw water W is measured by the urea meter 8, and sodium hypochlorite is added from the sodium hypochlorite addition means 3 and sodium bromide is added from the sodium bromide addition means 4 based on the urea concentration by the control means.

When sodium bromide and sodium hypochlorite are added to the raw water W, the sodium bromide and sodium hypochlorite are thoroughly mixed in a mixer 5, and then the mixture is retained in a reaction tank 6 for a predetermined time to complete the urea decomposition reaction.

Once the urea in the raw water W has been decomposed in this manner, sodium bisulfite is added from the sodium bisulfite addition means 7 for a reduction treatment, and the resulting treated water W1 may be supplied to a later-stage treatment.

According to the water treatment apparatus of this embodiment as described above, the chlorine concentration of the raw water W after sodium hypochlorite is added to the raw water W from the pretreatment hypochlorite addition means 11 is measured by the residual chlorine meter 13, and feedback control is performed to add sodium hypochlorite from the pretreatment hypochlorite addition means 11 based on this measurement value, thereby optimizing the control of the amount of sodium hypochlorite added by the sodium hypochlorite addition means 3 based on the measurement value of the urea meter 8 in the later stage and achieving stable urea decomposition treatment.

Although the present invention has been described based on the embodiments above, the present invention is not limited to the above-described embodiments and can be modified in various ways. For example, methods of adding chemicals from the sodium hypochlorite addition means 3, the sodium bromide addition means 4, and the pretreatment hypochlorite addition means 11 include a method of adding chemicals to the raw water W flowing through the supply pipe 2 using a general-purpose chemical injection pump or plunger pump, as well as a method of using mixers such as a line mixer and a mixing reaction tank in combination. Furthermore, the later-stage treatment is not limited to a pure water production apparatus or an ultrapure water production apparatus, and various apparatuses can be used. In addition, the control of various addition means such as the sodium hypochlorite addition means 3, the sodium bromide addition means 4, and the pretreatment hypochlorite addition means 11 may be manually performed based on the measurements of various measuring instruments.

### Example

The present invention will be described in more detail based on the following specific examples.

### [Example 1]

Tap water having a urea concentration of 15 µg/L and an ammonia nitrogen concentration of 0.12 mg/L was prepared as raw water W. This raw water W was supplied to the supply pipe 2, the chlorine demand of the raw water W was measured by adding an appropriate amount of sodium hypochlorite using a DPD reagent as a substitute for the chlorine demand meter 9, and the result was 1 mg/L (as available chlorine). Therefore, 1 mg/L of sodium hypochlorite (as available chlorine) was added to the raw water W, then 3 mg/L of sodium bromide and 1.2 mg/L of sodium hypochlorite (as available chlorine) were added, and the mixture was stirred for 1 minute in the mixer 5. Then, the mixture was left still in the reaction tank 6 for 6 hours at a water temperature of 22°C to decompose the urea in the raw water W.

Thereafter, sodium bisulfite was added to the effluent water from the reaction tank 6 from the sodium bisulfite addition means 7, the residual chlorine concentration was confirmed to be less than 0.02 mg/L using a DPD reagent, and this was used as a sample of the treated water W1 in Example 1.

When the urea concentration of the sample of this treated water W1 was measured by LC-MS analysis, the urea concentration was less than 0.5 µg/L.

### [Comparative Example 1]

In Example 1, 3 mg/L of sodium bromide and 1.2 mg/L of sodium hypochlorite (as available chlorine) were added to the raw water W, and the mixture was stirred for 1 minute in the mixer 5. Then, the mixture was left still in the reaction tank 6 for 6 hours at a water temperature of 22°C to decompose the urea in the raw water W.

Thereafter, sodium bisulfite was added to the effluent water from the reaction tank 6 from the sodium bisulfite addition means 7, the residual chlorine concentration was confirmed to be less than 0.02 mg/L using a DPD reagent, and this was used as a sample of the treated water W1 in Comparative Example 1.

When the urea concentration of the sample of this treated water W1 was measured by LC-MS analysis, the urea concentration was 11 µg/L.

### [Comparative Example 2]

In Example 1, 3 mg/L of sodium bromide and 4 mg/L of sodium hypochlorite (as available chlorine) were added to the raw water W, and the mixture was stirred for 1 minute in the mixer 5. Then, the mixture was left still in the reaction tank 6 for 6 hours at a water temperature of 22°C to decompose the urea in the raw water W.

Thereafter, sodium bisulfite was added to the effluent water from the reaction tank 6 from the sodium bisulfite addition means 7, the residual chlorine concentration was confirmed to be less than 0.02 mg/L using a DPD reagent, and this was used as a sample of the treated water W1 in Comparative Example 2.

When the urea concentration of the sample of this treated water W1 was quantified by LC-MS analysis, the urea concentration was less than 0.5 µg/L. However, compared to Example 1, there was an excess of sodium hypochlorite of 1.6 mg/L (as available chlorine). When reducing this sodium hypochlorite of 1.6 mg/L (as available chlorine) with sodium bisulfite, it is necessary to add an excess of about 2.2 mg/L of sodium bisulfite.

It was confirmed from the results of Example 1 and Comparative Examples 1 and 2 above that, in the treatment of adding a water-soluble bromide salt and hypochlorite based on the urea concentration to decompose urea, stable urea treatment can be performed with optimal addition amounts of hypochlorite and reducing agent by adding hypochlorite based on the chlorine demand of the raw water in addition to the water-soluble bromide salt and hypochlorite required for urea decomposition. Therefore, even if the urea concentration in the raw water W fluctuates, the addition amount of hypochlorite can be varied based on the corresponding chlorine demand of the raw water, thereby reducing the consumption of chemicals.

### Reference Signs List

1 water treatment apparatus
2 supply pipe
3 sodium hypochlorite addition means
4 sodium bromide addition means
5 mixer
6 reaction tank
7 sodium bisulfite addition means
8 urea meter
9 chlorine demand meter
11 pretreatment hypochlorite addition means
12 relay tank
13 residual chlorine meter
W raw water (water being treated)
W1 treated water

## Claims

1. A water treatment apparatus, comprising a chemical addition mechanism which includes a water-soluble bromide salt addition means and a hypochlorite addition means provided in a supply flow path for water being treated, the water treatment apparatus comprising:
a urea concentration measuring means provided upstream of the chemical addition mechanism; and
a control means adding hypochlorite based on chlorine consumption of the water being treated, and further adding hypochlorite from the hypochlorite addition means based on a measurement result of the urea concentration measuring means.

2. The water treatment apparatus according to claim 1, comprising a chlorine demand measuring means for the water being treated, upstream of the chemical addition mechanism, wherein the control means adds hypochlorite at 0.1 mg/L to 10 mg/L (as available chlorine) based on a measurement value of the chlorine demand measuring means.

3. The water treatment apparatus according to claim 1, comprising a residual chlorine concentration measuring means for the water being treated, on an upstream side of the chemical addition mechanism, and a pretreatment hypochlorite addition means upstream of the residual chlorine concentration measuring means, wherein the control means controls an addition amount of hypochlorite from the pretreatment hypochlorite addition means so that a residual chlorine concentration of the water being treated is 0.1 mg/L to 10 mg/L (as available chlorine).

4. A water treatment method for adding a water-soluble bromide salt and hypochlorite to water being treated and decomposing urea in the water being treated with generated hypobromite ions, the water treatment method comprising:
adding hypochlorite based on chlorine consumption of the water being treated before adding the water-soluble bromide salt and hypochlorite, measuring a urea concentration of the water being treated, and further adding hypochlorite based on a measurement result of the urea concentration.

5. The water treatment method according to claim 4, comprising measuring a chlorine demand of the water being treated before adding the water-soluble bromide salt and hypochlorite, and adding hypochlorite at 0.1 mg/L to 10 mg/L (as available chlorine) based on the chlorine consumption of the water being treated.

6. The water treatment method according to claim 4, comprising measuring a residual chlorine concentration of the water being treated before adding the water-soluble bromide salt and hypochlorite, and adding pretreatment hypochlorite to the water being treated so that the residual chlorine concentration of the water being treated is 0.1 mg/L to 10 mg/L (as available chlorine).

7. The water treatment method according to any one of claims 4 to 6, comprising controlling an addition amount of the water-soluble bromide salt based on a measurement value of the urea concentration.
